# EUROPEAN PATENT APPLICATION

(11) **EP 2 083 363 A1**
(43) Date of publication of application: **29.07.2009**
(21) Application number: 09000015.9
(22) Date of filing: 02.01.2009
(51) Int. Cl.: G06F 17/30

(54) **Content display apparatus for displaying media according to media categories**

(30) Priority: 07.01.2008 JP 2008000489
(71) Applicant: Funai Electric Co., Ltd., Daito-shi, Osaka 574-0013 (JP)
(72) Inventor: Yoshida, Hiroshi, Daito-shi Osaka 574-0013 (JP)
(74) Representative: Grünecker, Kinkeldey, Stockmair & Schwanhäusser Anwaltssozietät

(57) **Abstract**

A content display apparatus which is connected to a server having a recording medium to record a content such as a music content and an image content and content information including a file name of the content via a network is provided. The content display apparatus comprises a content similarity determination means which determines similarity of the contents received from the server in accordance with the content information received from the server and a content classification means which classifies the contents in accordance with the similarity determined by the content similarity determination means. The control means makes the display means display the content list so that the contents classified in the same type by the content classification means are visually connected.

## Description

### BACKGROUND OF THE INVENTION

### 1. Field of the Invention

The present invention relates to a content display apparatus, and more particularly, it relates to a content display apparatus which classifies and displays contents on a server.

### 2. Description of the Related Art

Conventionally, a network player which can obtain contents recorded in the server via a network and display and reproduce the contents is widely used. In this type of network player, a list indicating the contents is obtained from the server and the list is displayed. Then, the network player often obtains data of the contents selected by a user in the list from the server, and the contents are displayed and reproduced.

However, in this type of network player, as the contents recorded in the server increase in number, the contents, which are displayed in the list indicating the contents, also increase in number, so that it is difficult for the user to search the desired content, and thereby the conventional network player is not user-friendly.

In Japanese Laid-Open Patent Publication No. 2004 -341942, a content classification method in which a server automatically classifies contents recorded in the server is disclosed. However, in this method, when the network player cannot obtain the classification data in the server, the above problem cannot be solved.

In Japanese Laid-Open Patent Publication Nos. 2005 -251175, 2005 -196529, and 2006 -352722, classification methods which classify a print content, an image content, and so on are disclosed. However, these methods do not classify contents obtained via a network.

### SUMMARY OF THE INVENTION

The present invention is to solve the problem described above, and an object of the present invention is to provide a content display apparatus which can display contents on a server with the contents classified, and thereby is user-friendly.

According to an aspect of the present invention, this object is achieved by a content display apparatus which is connected to a server having a recording medium to record a content such as a music content and an image content and content information including a file name of the content via a network, comprising a receiving means which receives the content and the content information from the server, a display means which displays a list indicating the content and contents recorded in the server (abbreviated as the content list hereinafter), a control means which controls units in the content display apparatus, a content similarity determination means which determines similarity of the contents received from the server by the receiving means in accordance with the content information received by the receiving means, and a content classification means which classifies the contents in accordance with the similarity determined by the content similarity determination means.

The control means makes the display means display the content list so that the contents classified in the same type by the content classification means are visually connected.

With the above configuration, the content display apparatus can display the contents on the server with the contents classified. Thus, the content display apparatus enables the user to search the desired content easily, and thereby is user-friendly.

The content similarity determination means may determine the similarity of the contents by using the file names of the contents included in the content information.

It is preferable that the content list displayed on the display means includes not only a folder image indicating a type in which the contents are classified but also images indicating the contents, and images indicating the contents classified in the same type by the content classification means are displayed in lower hierarchy of the folder images.

The content similarity determination means may determine the similarity of the contents by N-gram method or morphological analysis.

The content information may include additional information including a file name, a category, and an artist name of the contents, and the content similarity determination means may determine the similarity of the contents by using the additional information.

### BRIEF DESCRIPTION OF THE DRAWINGS

The present invention will be described below with reference to the annexed drawings. It is to be noted that all the drawings are shown for the purpose of illustrating the technical concept of the present invention or embodiments thereof, wherein:
FIG. 1 is a schematic diagram showing a network system including a network player and a media server according to a preferred embodiment of the present invention;
FIG 2 is a block diagram showing an internal configuration of the network player in FIG 1;
FIG 3 is a block diagram showing an internal configuration of the media server in FIG 1;
FIG 4 is a list of content information;
FIG 5 is a flow chart showing a processing to display a content list in the network player in FIG 1;
FIG 6 is a flow chart showing a detailed processing to classify the content in a processing to display the content list;
FIG 7 is a schematic diagram showing a content data recorded in the media server in FIG. 1;
FIG 8 is a schematic diagram showing a similarity of the content in the network player in FIG 1; and
FIG 9 is a schematic diagram showing a content list in the network player in FIG 1.

### DESCRIPTION OF THE PREFERRED EMBODIMENTS

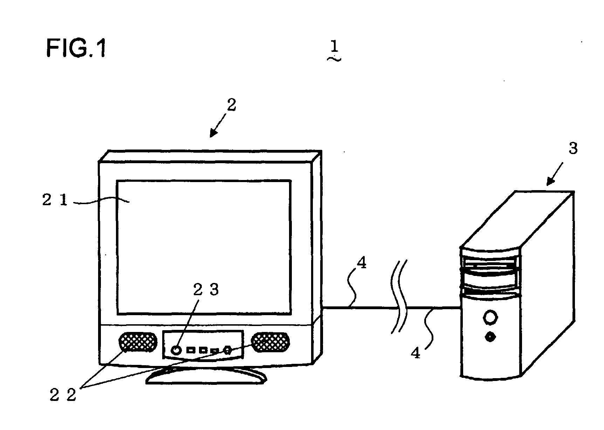

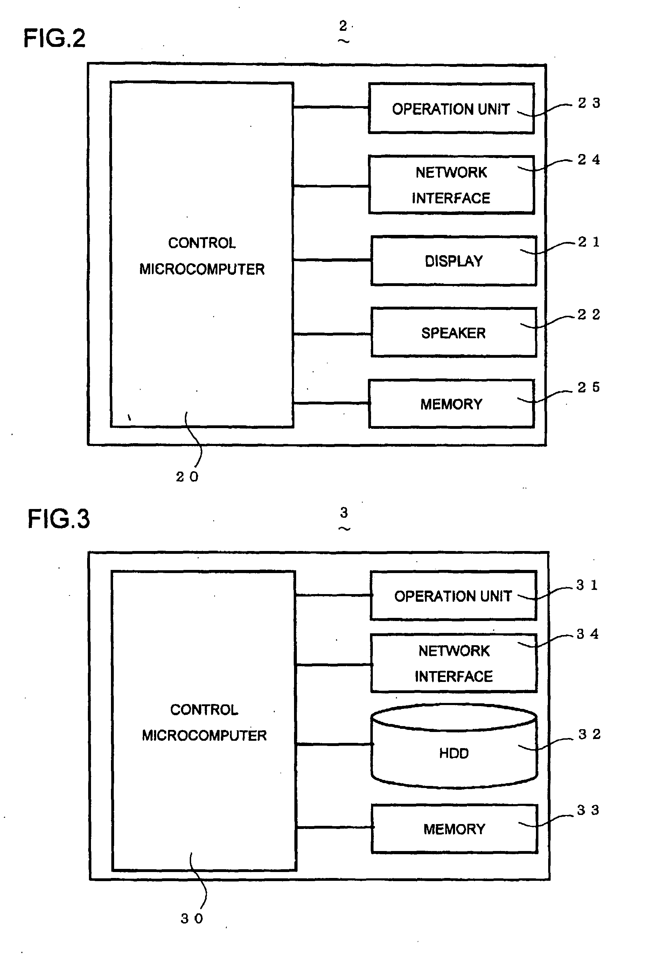

A network player (content display apparatus) according to a preferred embodiment of the present invention is described below with reference to FIGS. 1 to 3. FIG 1 shows a schematic configuration of a network system 1 including a network player 2 and a media server (server) 3, FIG 2 is a block diagram showing an internal configuration of the network player 2, and FIG 3 is a block diagram showing an internal configuration of the media server 3. The network player 2 and the server 3 are connected to each other via a network 4.

The media server 3 records not only data of contents including a music content and an image content such as a digital picture but also content information including a file name of the contents. The network player 2 can communicate with the media server 3 via the network 4, and also can display and reproduce the music content and the image content by receiving the contents from the media server 3.

The network player 2 and the media server 3 support DLNA (Digital Living Network Alliance) and can easily add or delete DLNA compliant devices on the network 4.

As shown in FIG 2, the network player 2 comprises an operation unit 23 to be operated by a user and give instructions to the network player 2, a network interface (receiving means) 24 which is connected to the network 4 (refer to FIG 1) to receive contents, content information, and so on from the media server 3, a display (display means) 21 to display the contents and so on, and a speaker 22 to output audios and so on.

The network player 2 further includes a control microcomputer (control means) 20 to control the units in the network player 2 and a memory 25 to store programs which make the control microcomputer 20 work, the contents, the contents information, and so on received from the media server 3.

The display 21 can display a list of the contents recorded in the media server 3 (abbreviated as the content list hereinafter) in addition to reproducing and displaying the contents.

The control microcomputer 20 functions as a content similarity determination means and a content classification means described in claims. Videos in the contents reproduced by the control microcomputer 20 are outputted to the display 21 and audios are outputted to the speaker 22.

As shown in FIG 3, the media server 3 comprises an operation unit 31 to be operated by a user and give instructions to the the media server 3, a network interface 34 which is connected to the network 4 (refer to FIG 1), an HDD (hard disk drive; a recording medium in claims) 32 in which the data of the contents are recorded, a control microcomputer 30 to control the units in the media server 3, and a memory 33 which stores programs and so on to make the control microcomputer 30 work.

The HDD 32 further records content information such as a file name of the content in addition to data of music contents and image contents. The content information is described in detail hereinafter.

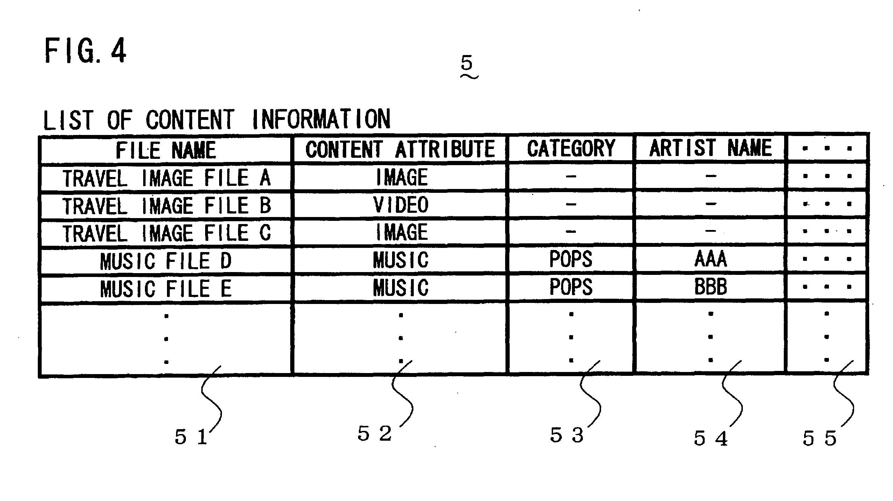

Next, the content information is described in detail with reference to FIG 4. FIG 4 shows a list of content information 5. As shown in FIG 4, the content information 5 includes additional information of a file name 51 which corresponds to each content, a content attribute 52, a category 53, an artist name 54, and other 55. The information of the category 53 and the artist name 54 are inputted when the content attribute 52 is music.

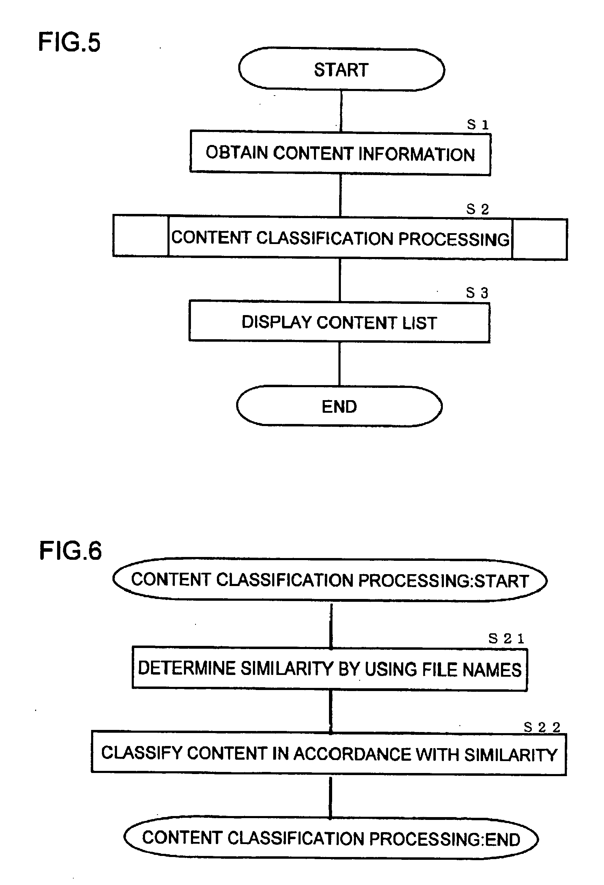

Next, the display processing of the content list performed by the network player 2 is described with reference to FIG 5. Firstly, the control microcomputer 20 obtains the content information 5 from the media server 3 (S1). Subsequently, the control microcomputer 20 performs a content classification processing to determine similarity of the respective contents recorded in the media server 3 in accordance with the contents information 5 received from the media server 3 (S2), and displays the content list, in which the contents classified in the same type are visually connected to each other, on the display 21 (S3). The content list displayed on the display 21 is described in detail hereafter. The content classification processing in the above S2 is also described in detail hereinafter. When the user selects a desired content from the content list, the control microcomputer 20 obtains the content selected by the user from the media server 3 and displays and reproduces the contents.

Next, the above content classification processing is described in detail with reference to FIG. 6. Firstly, the control microcomputer 20 determines the similarity of the contents by using the file names of the contents which are included in the content information 5 obtained in the above S1 (S21). Specifically, for example, the similarity of the contents is determined by N-gram method, in which the file name is divided into N characters blocks and occurrence rates of their N characters blocks are calculated, and morphological analysis, in which a word class is determined by analyzing a context and resolving a word. Subsequently, the control microcomputer 20 classifies the contents on the media server 3 in accordance with the similarity (S22).

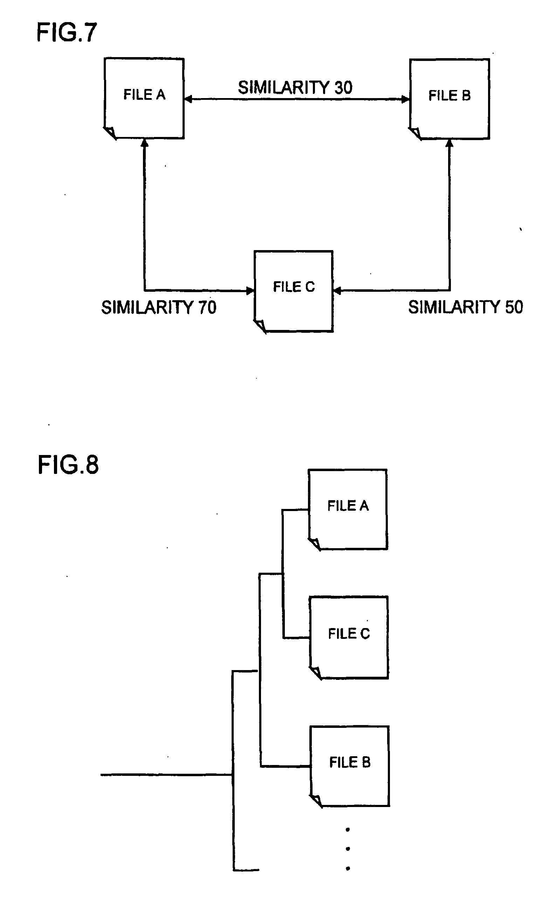

Next, an example of the content classification processing is described with reference to FIGS. 7 and 8. FIG 7 is a schematic diagram showing the similarity of the contents, and FIG 8 is a schematic diagram showing classification of the contents. In the present preferred embodiment, as shown in FIG 7, the classification of the contents whose file names are "file A", "file B", and "file C", respectively is described.

As shown in FIG 7, the similarity between the file A and the file B is 30, the similarity between the file A and the file C is 70, and the similarity between the file B and the file C is 50. At this time, if the control microcomputer 20 determines that two files are the same type of contents when the similarity between the two files is 70 or more, then the file A and the file C are determined to be the same type of contents.

Subsequently, as shown in FIG 8, the file A and the file C which are the same type of contents are located (classified) in the same hierarchy and contained in the same folder. In contrast, the file B which is different type of content from the files A and C is located (classified) in other hierarchy and contained in other folder.

Moreover, the control microcomputer 20 also can determine the similarity between the contents in accordance with the information of the content attribute 52, the category 53, the artist name 54, and so on included in the content information 5. The control microcomputer 20 may thereby classify the contents in accordance with the similarity. Specifically, for example, in case of the content which has the content attribute "music", the control microcomputer 20 determines the contents which have the content attribute "music" to have high similarity, and then classifies them in the same type. Moreover, in case of the content which has the artist name "AAA", the control microcomputer 20 determines the contents which have the artist name "AAA" to have high similarity, and then classifies them in the same type.

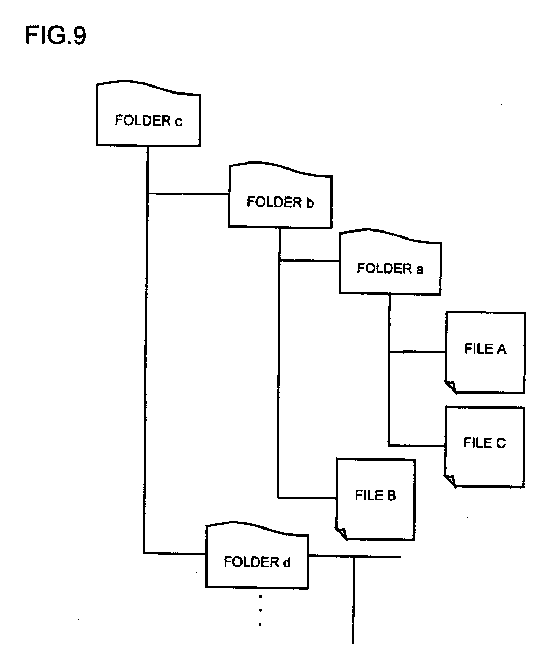

Next, the display of the content list is described with reference to FIG. 9. FIG 9 shows the content list displayed on the display 21. When the content list being displayed on the display 21, folder images (images of a folder a, a folder b, a folder c, and a folder d) indicating the type in which the contents are classified are displayed, and images indicating contents classified in the same type (images of a file A, a file B, and a file C) are visually connected in lower hierarchy of the same folder image and displayed as hierarchy.

The folders a, b, c, and d showing types can have a name (characters) which is common to the file names of the contents classified as the same type. Specifically, when the file names of the contents are "music A content" and "music B content", for example, a name of the folder which contains these contents may be "music".

As described above, according to the network player 2 of the present preferred embodiment, when the content list of the contents recorded in the media server 3 is displayed on the display 21, the contents classified in the same type are connected to each other and displayed on the display 21. In other words, the control microcomputer 20 makes the display 21 display the content list so that the contents classified in the same type are visually connected. Thus, the network player 2 enables the user to search the desired content easily, and thereby is user-friendly.

Moreover, even when only the limited information such as the file name of the content can be obtained from the media server 3, the network player 2 can classify and display the contents, and thereby is user-friendly.

The present invention is not limited to the configuration of the above preferred embodiment, however, various modification are applicable within the scope of the invention. For example, in the above preferred embodiments, the network player 2 classifies contents and displays the content list, however, a personal computer, which can be connected to the network, or the like can also classify contents and display the content list.

This application is based on Japanese patent application 2008-000489 filed January 7, 2008, the content of which is hereby incorporated by reference.

## Claims

1. A content display apparatus which is connected to a server having a recording medium to record not only a content including a music content and an image content but also content information including a file name of the content via a network, comprising:
a receiving means which receives the content and the content information from the server;
a display means which displays the content and a list indicating contents recorded in the server (abbreviated as the content list hereinafter);
a control means which controls units in the content display apparatus;
a content similarity determination means which determines similarity of the contents received from the server by the receiving means in accordance with the content information received by the receiving means; and
a content classification means which classifies the contents in accordance with the similarity determined by the content similarity determination means, wherein
the control means makes the display means display the content list so that the contents classified in the same type by the content classification means are visually connected.

2. The content display apparatus according to claim 1, wherein
the content similarity determination means determines the similarity of the contents by using file names of the contents included in the content information.

3. The contents display apparatus according to claim 2,
wherein the content list displayed on the display means includes not only a folder image indicating a type in which the contents are classified but also images indicating the contents, and
wherein images indicating the contents classified in the same type by the content classification means are displayed in lower hierarchy of the folder images.

4. The content display apparatus according to claim 2, wherein
the content similarity determination means determines the similarity of the contents by N-gram method.

5. The content display apparatus according to claim 2, wherein
the content similarity determination means determines the similarity of the contents by morphological analysis.

6. The content display apparatus according to claim 1, wherein
the content information includes additional information including a file name, a category, and an artist name of the contents, and
the content similarity determination means determines the similarity of the contents by using the additional information.

7. The contents display apparatus according to claim 6,
wherein the content list displayed on the display means includes not only a folder image indicating a type in which the contents are classified but also images indicating the contents, and
wherein images indicating the contents classified in the same type by the content classification means are displayed in lower hierarchy of the folder images.

8. The contents display apparatus according to claim 1,
wherein the content list displayed on the display means includes not only a folder image indicating a type in which the contents are classified but also images indicating the contents, and
wherein images indicating the contents classified in the same type by the content classification means are displayed in lower hierarchy of the folder images.
